# EUROPÄISCHE PATENTSCHRIFT

(11) **EP 2 383 165 B1**
(45) Veröffentlichungstag und Bekanntmachung des Hinweises auf die Patenterteilung: **29.05.2013**
(21) Anmeldenummer: 11002773.7
(22) Anmeldetag: 02.04.2011
(51) Int. Cl.: B62D 1/184

(54) **Spannteil für eine in einer verstellbaren Lenksäule für ein Kraftfahrzeug integrierte Spannvorrichtung**
Tensioning member for a tensioning device integrated into an adjustable steering column for a motor vehicle
Elément de serrage pour un dispositif de serrage intégré dans une colonne de direction réglable pour un véhicule automobile

(30) Priorität: 28.04.2010 DE 102010016679
(43) Veröffentlichungstag der Anmeldung: 02.11.2011
(73) Patentinhaber: ThyssenKrupp Presta Aktiengesellschaft, 9492 Eschen (LI)
(72) Erfinder: Senn, Mathias, 9472 Grabs (CH); Schönenberger, Markus, 9533 Kirchberg (CH); Düring, Michael, 9402 Mörschwil (CH); Bösch, Roger, 9450 Altstätten (CH)
(74) Vertreter: Hofmann, Ralf U.

(56) Entgegenhaltungen:
- EP-A1- 0 600 700
- EP-A2- 1 180 466
- EP-A2- 1 500 570
- JP-A- 2005 231 545
- US-A1- 2006 225 530

## Beschreibung

Die Erfindung bezieht sich auf ein Spannteil für eine in einer verstellbaren Lenksäule für ein Kraftfahrzeug integrierte Spannvorrichtung, die durch eine um eine Längsachse erfolgende Verdrehung des Spannteils gegenüber einem Gegenspannteil schließbar und öffenbar ist, wobei das Spannteil ein Nockenteil, das zum Zusammenwirken mit dem als Nockenfolgerteil ausgebildeten Gegenspannteil mindestens einen Nocken mit einer Nockenfläche aufweist, oder ein Nockenfolgerteil ist, das zum Zusammenwirken mit dem als Nockenteil ausgebildeten Gegenspannteil mindestens ein Nockenfolgerelement mit einer Nockenfolgerfläche aufweist, und wobei das Spannteil aus einem Blechteil ausgebildet ist. Weiters bezieht sich die Erfindung auf eine verstellbare Lenksäule für ein Kraftfahrzeug mit einer Spannvorrichtung, in deren geöffnetem Zustand eine einen Abschnitt der Lenkspindel drehbar lagernde Stelleinheit der Lenksäule verstellbar ist und in deren geschlossenem Zustand die eingestellte Position der Stelleinheit festgestellt ist, wobei die Spannvorrichtung ein Nockenteil, das mindestens einen Nocken mit einer Nockenfläche aufweist, und ein Nockenfolgerteil umfasst, das mindestens ein Nockenfolgerelement mit einer Nockenfolgerfläche aufweist, und wobei das Nockenteil und das Nockenfolgerteil zum Öffnen und Schließen der Spannvorrichtung gegeneinander verdrehbar sind und das Nockenteil und/oder das Nockenfolgerteil aus einem Blechteil ausgebildet ist bzw. sind. Weiters bezieht sich die Erfindung auf ein Verfahren zur Herstellung eines Spannteils für eine in einer verstellbaren Lenksäule für ein Kraftfahrzeug integrierte Spannvorrichtung, die durch eine um eine Längsachse erfolgende Verdrehung des Spannteils gegenüber einem Gegenspannteil schließbar und öffenbar ist, wobei das Spannteil ein Nockenteil, das zum Zusammenwirken mit dem als Nockenfolgerteil ausgebildeten Gegenspannteil mindestens einen Nocken mit einer Nockenfläche aufweist, oder ein Nockenfolgerteil ist, das zum Zusammenwirken mit dem als Nockenteil ausgebildeten Gegenspannteil mindestens ein Nockenfolgerelement mit einer Nockenfolgerfläche aufweist, und wobei das Spannteil aus einem Blechteil ausgebildet wird.

Verstellbare Lenksäulen sind in vielen unterschiedlichen Ausführungsformen bekannt. Zum Feststellen der gewählten Einstellung dienen Spannvorrichtungen. Im geschlossenen Zustand der Spannvorrichtung können beispielsweise durch die Spannvorrichtung miteinander verspannte Reibflächen zur kraftschlüssigen Feststellung oder durch die Spannvorrichtung zusammengeführte Verzahnungen zur formschlüssigen Feststellung vorgesehen sein. Die Verstellbarkeit kann sich auf die axiale Richtung der Lenksäule und/oder die Neigungsverstellung bzw. Höhenrichtung beziehen.

Bekannt sind Spannvorrichtungen, bei denen zum Schließen und Öffnen der Spannvorrichtung ein Nockenteil gegenüber einem Nockenfolgerteil verdreht wird. Die Verdrehung wird meist manuell mittels eines Betätigungshebels durchgeführt. Das Nockenteil und das Nockenfolgerteil sind hierbei auf einem Spannbolzen angeordnet, wobei beim Schließen der Spannvorrichtung eine relative axiale Verschiebung zwischen dem Spannbolzen und dem Nockenfolgerteil auftritt. Derartige verstellbare Lenksäule gehen beispielsweise aus der EP 1 500 570 A2, der WO 2010/022855 A1 und der EP 1 180 466 A2 hervor.

Zur Vereinfachung der Spannvorrichtung wird in der DE 10 2008 024 405 A1 vorgeschlagen, den Spannbolzen und das Nockenteil einteilig, bevorzugt durch eine Umformung herzustellen. Ein Nachteil dieser technischen Lösung besteht jedoch in der Einschränkung für die darstellbaren Nockenkonturen. Weiters kann es erwünscht sein, das Nockenteil und/oder das Nockenfolgerteil als separates Bauteil auszubilden, um die Lenksäule an bestimmte Montageerfordernisse besser anpassen zu können.

Aus der EP 1 681 223 B1 geht eine verstellbare Lenksäule hervor, bei der das Nockenteil und das Nockenfolgerteil einstückig mit dem Betätigungshebel bzw. einer Seitenwange eines konsolenfesten Halteteils ausgebildet sind. Die Ausbildung erfolgt hierbei aus ursprünglich flachen Blechteilen durch entsprechende Umformoperationen, insbesondere Pressoperationen zur Ausbildung der Nocken des Nockenteils und der Nockenfolgerelemente des Nockenfolgerteils. Die aus dieser Schrift hervorgehende Herstellung ist zwar einfach, bietet aber nur eingeschränkte Möglichkeiten definierte Nockenkonturen darzustellen. Auch ist die erzielte Hubhöhe gering. Weiters besteht die Gefahr, dass die Steifigkeit nicht ausreichend hoch ist, um die Stabilität im Dauereinsatz zu gewährleisten, wodurch sich die Spannkraft im Laufe der Zeit verringern kann.

Aus der JP 2003-231470 A geht eine verstellbare Lenksäule hervor, deren Spannvorrichtung pressgeformte Nockenteile und Nockenfolgerteile aufweist.

Die US 5,722,299 A zeigt eine verstellbare Lenksäule, bei der das Nockenteil mit einem Nockenfolgerteil aus Blech zusammenwirkt, welches mit den Nocken zusammenwirkende, in einer Ebene liegende Zungen aufweist.

Aufgabe der Erfindung ist es ein als Nockenteil oder Nockenfolgerteil ausgebildetes Spannteil der eingangs genannten Art bereitzustellen, das einfach und kostengünstig herstellbar ist, wobei eine gute Dauerhaltbarkeit gegeben ist, bzw. eine Lenksäule der eingangs genannten Art bereitzustellen, die ein solches Nockenteil und/oder Nockenfolgerteil aufweist.

Erfindungsgemäß gelingt dies durch ein Spannteil mit den Merkmalen des Anspruchs 1 bzw. durch eine verstellbare Lenksäule mit den Merkmalen des Anspruchs 4 bzw. durch ein Verfahren mit den Merkmalen des Anspruchs 7. Aus den abhängigen Ansprüchen gehen vorteilhafte Weiterbildungen hervor.

Beim Spannteil der Erfindung ist die Nockenfläche des mindestens einen Nockens des Spannteils bzw. die Nockenfolgerfläche des mindestens einen Nockenfolgerelementes des Spannteils an einer zum Gegenspannteil gerichteten Randfläche des das Spannteil ausbildenden Blechteils angeordnet.

Das Spannteil ist als Nockenteil, welches mindestens einen Nocken mit einer Nockenfläche aufweist, oder als Nockenfolgerteil ausgebildet, welches mindestens ein Nockenfolgerelement mit einer Nockenfolgerfläche aufweist. Falls das Spannteil als Nockenteil ausgebildet ist, so ist das Gegenspannteil, das zum Zusammenwirken mit dem Spannteil vorgesehen ist, ein Nockenfolgerteil, welches zum Zusammenwirken mit dem mindestens einen Nocken des Spannteils mindestens ein Nockenfolgerelement mit einer Nockenfolgerfläche aufweist. Falls das Spannteil als Nockenfolgerteil ausgebildet ist, so ist das Gegenspannteil ein Nockenteil, welches zum Zusammenwirken mit dem mindestens einen Nockenfolgerelement des Spannteils mindestens einen Nocken mit einer Nockenfläche aufweist. Zum Öffnen und Schließen der Spannvorrichtung, in der das Spannteil und das Gegenspannteil zum Einsatz kommen, werden das Spannteil und Gegenspannteil gegeneinander um eine Längsachse verdreht. Hierbei kann das Spannteil um die Längsachse gedreht werden und das Gegenspannteil gegenüber der Längsachse unverdrehbar gehalten werden oder das Gegenspannteil um die Längsachse gedreht werden und das Spannteil um die Längsachse unverdrehbar gehalten werden. Die Spannvorrichtung wirkt in Richtung dieser Längsachse.

Das Spannteil, das ein Nockenteil oder ein das Nockenfolgerteil ist, ist aus einem umgeformten Blechteil ausgebildet. Vor der Umformung ist das Blechteil eben und besitzt eine obere und eine untere Deckfläche und eine umlaufende Randfläche, welche die obere und untere Deckfläche miteinander verbindet. Die Deckflächen bilden die gegenüber liegenden groß-flächigen Seiten des Blechteils und die umlaufende Randfläche bildet die Schmalseite des Blechteils. Nach der Umformung ist diese umlaufende Randfläche oder zumindest ein Abschnitt der umlaufenden Randfläche des Spannteils zum Gegenspannteil gerichtet, das zum Zusammenwirken mit dem Spannteil vorgesehen ist. Die zum Gegenspannteil gerichtete schmalseitige Randfläche des das Spannteil ausbildenden Blechteils weist, falls das Spannteil in Form eines Nockenteils ausgebildet ist, die Nockenfläche des mindestens einen Nockens des Spannteils auf oder die zum Gegenspannteil gerichtete schmalseitige Randfläche des das Spannteil ausbildenden Blechteils weist, falls das Spannteil in Form eines Nockenfolgerteils ausgebildet ist, die Nockenfolgerfläche des mindestens einen Nockenfolgerelements des Spannteils auf.

Die Ausrichtung der Randfläche des das Spannteil ausbildenden Blechteils zum Gegenspannteil, wobei diese Randfläche des Blechteils die Nockenfläche des mindestens einen Nockens bzw. die Nockenfolgerfläche des mindestens einen Nockenfolgerelements des Spannteils bildet, ist vorzugsweise in der Form gegeben, dass die Oberflächennormale der Randfläche parallel zur Längsachse ausgerichtet ist, um welche das Spannteil und das zum Zusammenwirken mit dem Spannteil vorgesehene Gegenspannteil gegeneinander verdrehbar sind. Eine Abweichung gegenüber dieser parallelen Ausrichtung ist grundsätzlich denkbar und möglich, wenn auch weniger bevorzugt, wobei eine solche Abweichung vorteilhafterweise unter 30°, vorzugsweise unter 15° liegen würde.

Nockenteile, die einen scheibenförmigen Abschnitt aufweisen, von dem mindestens ein Nocken in eine Richtung rechtwinkelig zum scheibenförmigen Abschnitt absteht, werden auch als Nockenscheiben bezeichnet. Damit kann ein erfindungsgemäßes, als Nockenteil ausgebildetes Spannteil in einer bevorzugten Ausführungsform der Erfindung, bei welcher der mindestens eine Nocken in eine Richtung rechtwinkelig zur Ebene, in der ein scheibenförmiger Abschnitt des Nockenteils liegt, auch als Nockenscheibe bezeichnet werden.

Vorteilhafterweise ist das Spannteil gemäß der Erfindung topfförmig ausgebildet, wobei es einen Boden aufweist, von dem eine sich zumindest über den Großteil des Umfangs des Bodens erstreckende, vorzugsweise um den gesamten Umfang des Bodens verlaufende, Wand absteht. Die vom Boden abgewandte stirnseitige Schmalfläche (Endfläche) der Wand bildet über einen (jeweiligen) Abschnitt ihres Verlaufs die (jeweilige) Nockenfläche bzw. Nockenfolgerfläche. Die Wand ist hierbei in Draufsicht auf den Boden gesehen zumindest in den Abschnitten, in denen sie die Nockenfläche bzw. Nockenfolgerfläche aufweist, mit einem kreisringförmigen Verlauf ausgebildet, vorzugsweise ist die Wand umfänglich mit einem kreisringförmigen Verlauf ausgebildet.

Eine bevorzugte Ausführungsform einer erfindungsgemäßen verstellbaren Lenksäule, die zum Feststellen der eingestellten Position der Lenksäule eine Spannvorrichtung mit einem Nockenteil und einem Nockenfolgerteil aufweist, von denen mindestens eines als Spannteil gemäß der Erfindung ausgebildet ist, sieht vor, dass das Nockenteil und das Nockenfolgerteil auf einem Spannbolzen der Spannvorrichtung angeordnet sind, d.h. der Spannbolzen durchsetzt zentrale Öffnungen des Nockenteils und des Nockenfolgerteils, wobei die relative Verdrehung zwischen dem Nockenteil und dem Nockenfolgerteil um die Längsachse des Spannbolzens erfolgt. Der Spannbolzen verläuft hierbei rechtwinkelig zur Längsachse des von der Stelleinheit der Lenksäule gelagerten Abschnitts der Lenkspindel. Beim Öffnen und Schließen der Spannvorrichtung erfolgt eine relative axiale Verschiebung zwischen dem Nockenfolgerteil und dem Spannbolzen oder zwischen dem Nockenteil und dem Spannbolzen.

Zur Herstellung eines erfindungsgemäßen Spannteils wird aus einem ebenen Blech durch Zerteilen des Blechs, insbesondere durch Ausstanzen, zunächst ein Zwischenprodukt in Form eines ebenen Blechteils ausgebildet. Dieses ebene Blechteil besitzt eine entsprechende Umfangskontur und weist eine obere und eine untere Deckfläche, welche die Großflächen des Blechteils bilden, und eine umlaufende Randfläche auf, welche die obere und die untere Deckfläche miteinander verbindet. Das als ebenes Blechteil ausgebildete Zwischenprodukt wird im Weiteren umgeformt, wobei ein Boden und eine vom Boden abstehende Wand ausgebildet werden. Die vom Boden abgewandte stirnseitige Schmalfläche (Endfläche) der Wand wird dabei von der Randfläche des Blechteils (=Zwischenprodukts) gebildet und weist die mindestens eine Nockenfläche bzw. Nockenfolgerfläche auf. Die Wand kann auch von mehreren einzelnen Wandabschnitten gebildet werden, die in Umfangsrichtung des Nockenteils bzw. Nockenfolgerteils durch dazwischen liegende Lücken getrennt sind.

Ein Nockenteil und ein mit diesem zusammenwirkendes Nockenfolgerteil einer Spannvorrichtung, wobei das Nockenteil und das Nockenfolgerteil zum Öffnen und Schließen der Spannvorrichtung um eine Längsachse gegeneinander verdreht werden, können auch im Wesentlichen gleich ausgebildet sein, d.h. das Nockenfolgerteil bildet ebenfalls mindestens einen Nocken mit einer Nockenfläche bzw. das Nockenteil bildet ebenfalls mindestens ein Nockenfolgerelement mit einer Nockenfolgerfläche. Es kann somit keine Unterscheidbarkeit gegeben sein, ob das Spannteil das Nockenteil und das Gegenspannteil das Nockenfolgerteil ist oder umgekehrt. Es kann dann beliebig eines der beiden Teile (Spannteil oder Gegenspannteil) als Nockenteil und das andere der beiden Teile als Nockenfolgerteil angesehen werden.

Weitere Vorteile und Einzelheiten der Erfindung werden im Folgenden anhand der beiliegenden Zeichnung erläutert. In dieser zeigen:
Fig. 1 eine Schrägsicht eines Ausführungsbeispiels für eine Lenksäule mit einem erfindungsgemäßen Spannteil;
Fig. 2 und 3 vergrößerte Darstellungen des Nockenteils und des Nockenfolgerteils, in Schrägsicht;
Fig. 4 und 5 das Nockenteil und das Nockenfolgerteil in einer der Betriebsstellung entsprechenden Anordnung, ohne den sie durchsetzenden Spannbolzen, in der gegenseitigen Lage im geöffneten Zustand der Spannvorrichtung (Fig. 4) und im geschlossenen Zustand der Spannvorrichtung (Fig. 5), in Schrägsicht;
Fig. 6 und 7 eine Ansicht und eine Seitenansicht des ebenen Blechteils, aus welchem das Nockenteil ausgebildet wird;
Fig. 8 und 9 eine Ansicht und Seitenansicht des ebenen Blechteils, aus welchem das Nockenfolgerteil ausgebildet wird.

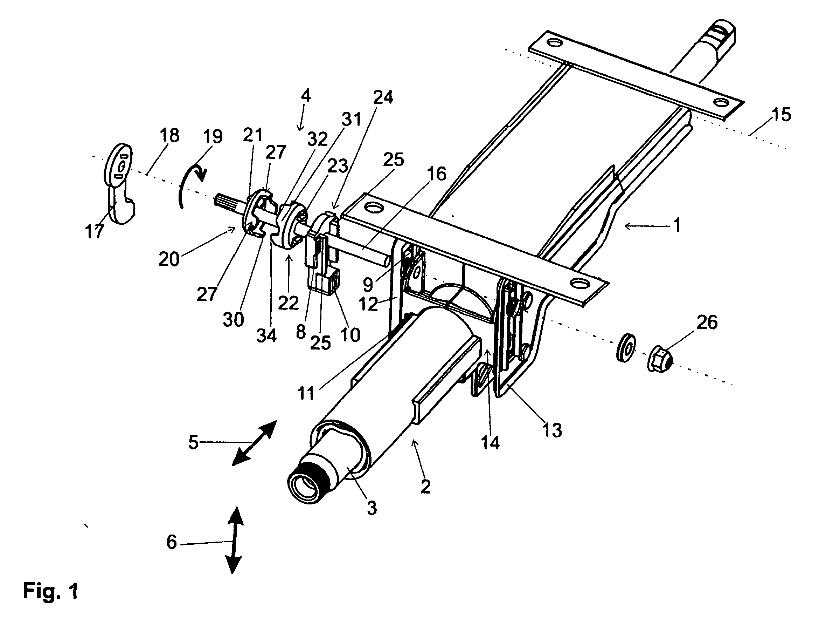

Fig. 1 zeigt in einer etwas vereinfachten Darstellung ein mögliches Ausführungsbeispiel einer Lenksäule, bei der ein in der erfindungsgemäßen Weise ausgebildetes Nockenteil und Nockenfolgerteil zum Einsatz kommen. Abgesehen von der Ausbildung des Nockenteils und Nockenfolgerteils entspricht die Lenksäule dem vorbekannten Stand der Technik, beispielsweise entsprechend der in der Beschreibungseinleitung genannten WO 2010/022855 A1.

Die Lenksäule umfasst eine Trageinheit 1, die mit dem Chassis des Kraftfahrzeugs verbindbar ist, und eine Stelleinheit 2, die einen an das lenkradseitige Ende der Lenksäule anschließenden Abschnitt der Lenkspindel 3 drehbar lagert. Die Stelleinheit 2 ist in Form eines umfangsgeschlossenen Mantelrohrs ausgebildet, könnte aber auch zumindest teilweise umfangsoffen ausgebildet sein.

Im geöffneten Zustand einer Spannvorrichtung 4 ist die Stelleinheit 2 in Längsrichtung 5 der Lenksäule (=in Richtung der Längsachse der Lenkspindel 3) für eine Längenverstellung der Lenksäule und in die Stellrichtung 6 für eine Höhe- bzw. Neigungsverstellung der Lenksäule gegenüber der Trageinheit 1 verstellbar. Im geschlossenen Zustand der Spannvorrichtung 4 ist die eingestellte Position der Stelleinheit 2 gegenüber der Trageinheit 1 festgestellt. Zur Feststellung der Verstellung dienen beispielsweise, wie dargestellt, ineinandergreifende Verzahnungen 8-11. Stattdessen könnten zur Feststellung auch Reibflächen vorgesehen sein. Auch andere formschlüssig wirkende Feststellelemente sind bekannt und könnten eingesetzt werden. Weiters können zur Feststellung auch Kombinationen von formschlüssig und reib-schlüssig wirkenden Elementen eingesetzt werden. Zur Erhöhung der Anzahl der Reibflächen können auch nach Art von Lamellenkupplungen zusammenwirkende Lamellen vorgesehen sein. Die Verzahnungen und/oder anderen Feststellelemente können ein- oder beidseitig bezüglich der Längsmittelachse vorgesehen sein. Alle diese Ausbildungen sind bekannt.

Die Stelleinheit 2 ist zwischen Seitenwangen 12, 13 der Trageinheit 1 angeordnet. Im gezeigten Ausführungsbeispiel ist weiters zwischen der Trageinheit 1 und der Stelleinheit 2 eine Zwischeneinheit 14 angeordnet. Die Zwischeneinheit 14 ist im geöffneten Zustand der Spannvorrichtung 4 gegenüber der Trageinheit 1 in die der Höhen- bzw. Neigungsverstellung entsprechende Stellrichtung 6 verstellbar. Hierzu ist sie um eine Schwenkachse 15, deren Ausbildung im gezeigten Ausführungsbeispiel nicht im Einzelnen dargestellt ist, gegenüber der Trageinheit 1 verschwenkbar. In die Längsrichtung 5 der Lenksäule ist die Zwischeneinheit 14 gegenüber der Trageinheit 1 unverschiebbar. Im geöffneten Zustand der Spannvorrichtung 4 ist weiters die Stelleinheit 2 in Längsrichtung 5 gegenüber der Zwischeneinheit 14 zur Längeneinstellung der Lenksäule verstellbar. In die Stellrichtung 6 ist die Stelleinheit 2 gegenüber der Zwischeneinheit 14 unverstellbar.

Im geschlossenen Zustand der Spannrichtung 4 sind die Seitenwangen 12, 13 der Trageinheit 1 gegen die Zwischeneinheit 14 verspannt.

Es ist dabei möglich, die Verbindung der Trageinheit 1 mit dem Chassis des Kraftfahrzeuges und/oder die Verbindung der Zwischeneinheit 14 mit der Trageinheit 1 und/oder die Verbindung der Stelleinheit 2 mit der Zwischeneinheit 14 unter Zwischenschaltung bekannter Crashenergieabsorptionseinrichtungen darzustellen.

Die Ausbildung mit einer Trageinheit 1, Stelleinheit 2 und dazwischenliegenden Zwischeneinheit 14 in der beschriebenen Form ist bekannt. Eine solche Zwischeneinheit 14 könnte auch entfallen, wie dies ebenfalls bekannt ist. Im geschlossenen Zustand der Spannvorrichtung 4 werden die Seitenwangen 12, 13 dann direkt an die Stelleinheit 2 angedrückt.

Die Spannvorrichtung 4 umfasst einen rechtwinklig zur Längsachse der Lenkspindel 3 verlaufenden Spannbolzen 16, der Öffnungen in den Seitenwangen 12, 13 durchsetzt. Zur Ermöglichung der Höhen- bzw. Neigungsverstellung sind die vom Spannbolzen 16 durchsetzten Öffnungen in den Seitenwangen 12, 13 als in die Stellrichtung 6 verlaufende Langlöcher ausgebildet. Der Spannbolzen 16 durchsetzt weiters Öffnungen in der Zwischeneinheit 14. Er könnte auch Öffnungen in der Stelleinheit 2 durchsetzen, insbesondere bei Ausbildungen, bei denen eine Zwischeneinheit 14 entfällt. Diese Öffnungen in der Stelleinheit 2 wären zur Ermöglichung einer Längsverstellung der Lenksäule als in die Längsrichtung 5 verlaufende Langlöcher ausgebildet.

Eine erfindungsgemäße Lenksäule könnte auch nur in die Längsrichtung 5 oder nur in die der Höhen- bzw. Neigungsverstellung entsprechende Stellrichtung 6 verstellbar sein.

Zum Öffnen und Schließen der Spannvorrichtung 4 dient ein vom Benutzer betätigbarer Betätigungshebel 17. Zum Schließen der Spannvorrichtung 4 wird der Betätigungshebel 17, ausgehend von einer Offenstellung um die Längsachse 18 des Spannbolzens 16 in eine Schließdrehrichtung 19 bis in eine Schließstellung verschwenkt. In anderen Ausführungsformen könnte die Verdrehung des Spannbolzens 16 um seine Längsachse 18 auch in anderer Weise erfolgen, beispielsweise motorisch.

Bei der Verdrehung des Spannbolzens 16 um seine Längsachse 18 wird ein vom Spannbolzen 16 durch eine zentrale Öffnung 42 durchsetztes Nockenteil 20 mitgenommen, also um die Längsachse 18 gedreht. Beispielsweise kann es hierzu über Formelemente 21 form-schlüssig mit dem Stellhebel 17 verbunden sein. Das Nockenteil 20 bildet ein Spannteil der Spannvorrichtung 4.

Auf dem Spannbolzen 16 ist weiters ein vom Spannbolzen 16 durchsetztes Nockenfolgerteil 22 angeordnet, das durch eine zentrale Öffnung 42' vom Spannbolzen 16 durchsetzt wird. Dieses ist um die Längsachse 18 des Spannbolzens 16 unverdrehbar gehalten, beispielsweise durch Formelemente 23, über die das Nockenfolgerteil 22 mit einem Feststellteil 24 form-schlüssig verbunden ist. Das Nockenfolgerteil 22 bildet ein Gegenspannteil der Spannvorrichtung 4. Das Feststellteil 24 wird ebenfalls vom Spannbolzen 16 durchsetzt und ist um dessen Längsachse 18 unverdrehbar gehalten, beispielsweise wie im gezeigten Ausführungsbeispiel gezeigt durch mit der Seitenwange 12 zusammenwirkende Führungsleisten 25, die von der Seitenwange 12 (beispielsweise von den Rändern der vom Spannbolzen 16 durchsetzten Öffnung, an denen sie anliegen) in die Stellrichtung 6 verschiebbar geführt sind. Auch eine andere um die Längsachse 18 unverdrehbare Halterung des Feststellteils 24 ist denkbar und möglich.

Das Feststellteil 24 weist mindestens ein formschlüssig und/oder reibschlüssig wirkendes Feststellelement, beispielsweise eine Reibfläche oder wie im gezeigten Ausführungsbeispiel gezeigt Verzahnungen 8, 10 auf, mit denen im geschlossenen Zustand der Spannvorrichtung eine Feststellung der eingestellten Stellung der Lenksäule erfolgt.

Im gezeigten Ausführungsbeispiel ist nur auf einer Seite der Trageinheit 1 ein Feststellteil 24 dargestellt. Auf der anderen Seite der Trageinheit wirkt hier die auf den Spannbolzen 16 aufgeschraubte Mutter als Feststellteil, welches im geschlossenen Zustand der Spannvorrichtung 4 gegen die Seitenwange 13 der Trageinheit 1 verspannt wird. Auch auf der anderen Seite der Trageinheit 1 könnte ein separates vom Spannbolzen 16 durchsetztes Feststellteil mit mindestens einem formschlüssig und/oder reibschlüssig wirkenden Feststellelement vorgesehen sein.

Bei der Verdrehung des Nockenteils 20 gegenüber dem Nockenfolgerteil 22 zum Schließen und Öffnen der Spannvorrichtung erfolgt eine relative axiale Verschiebung zwischen dem Nockenfolgerteil 22 und dem Spannbolzen 16. Hierbei verschiebt sich das Nockenfolgerteil 22 in die zur Trageinheit 1 weisende Richtung und der Spannbolzen 16 verschiebt sich mehr oder weniger in die entgegengesetzte Richtung.

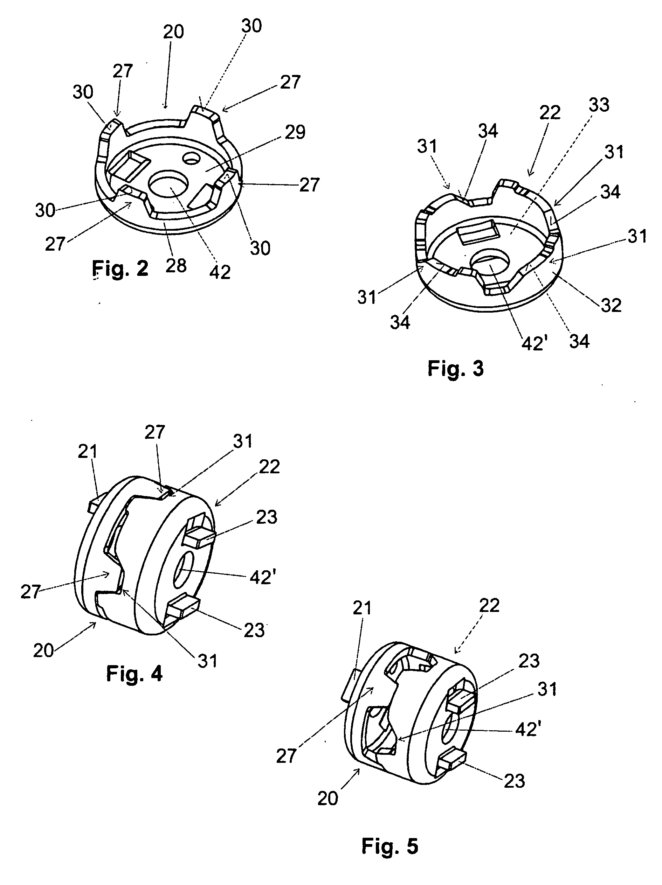

Das Nockenteil 20 weist, wie am Besten aus Fig. 2 ersichtlich ist, im gezeigten Ausführungsbeispiel vier in Umfangsrichtung voneinander beabstandete Nocken 27 auf. Es könnten auch mehr oder weniger Nocken 27 vorgesehen sein. Die Nocken 27, welche in axialer Richtung des Spannbolzens 16 sich erstreckende Vorsprünge bilden, werden von einer Wand 28 des Nockenteils 20 ausgebildet, welche von einem Boden 29 des Nockenteils 20 im Bereich vom äußeren Rand des Bodens 29 umfänglich absteht. Der Boden 29 liegt in einer Ebene, die im montierten Zustand rechtwinkelig zur Längsachse 18 des Spannbolzens 16 steht.

Die Wand 28 ist zylindrisch ausgebildet, besitzt also in Draufsicht auf den Boden 29 gesehen einen kreisringförmigen Verlauf. Die Längsachse der zylindrischen Wand fällt hierbei mit der Längsachse 18 des Spannbolzens 16 zusammen, d.h. die Wand 28 und der Spannbolzen 16 sind konzentrisch.

Ein jeweiliger Nocken 27 besitzt zum Zusammenwirken mit dem Nockenfolgerteil 22 eine Nockenfläche 30. Diese wird von der vom Boden 29 abgewandten stirnseitigen Schmalfläche der Wand 28 über einen jeweiligen Abschnitt der umfänglichen Erstreckung der stirnseitigen Schmalfläche dieser Wand 28 gebildet.

Das Nockenteil 20 ist aus einem ursprünglich ebenen Blechteil ausgebildet, welches eine obere und eine untere Deckfläche und eine die obere mit der unteren Deckfläche verbindende umlaufende Randfläche (das ist also die schmalseitige Fläche des Blechteils) besitzt. Nach dem Umformen des Blechteils bildet diese umlaufende Randfläche des Blechteils die vom Boden abgewandte stirnseitige Schmalfläche der Wand 28, d.h. die jeweilige Nockenfläche 30 wird von einem Abschnitt der umlaufenden Randfläche des ursprünglich ebenen Blechteils gebildet, aus dem das Nockenteil 20 ausgebildet ist.

Das Nockenfolgerteil 22 weist, wie am Besten aus Fig. 3 ersichtlich ist, im gezeigten Ausführungsbeispiel vier in Umfangsrichtung voneinander beabstandete Nockenfolgerelemente 31 auf. Es könnten auch mehr oder weniger Nockenfolgerelemente 31 vorgesehen sein. Die Nockenfolgerelemente 31 werden von einer Wand 32 des Nockenfolgerteils 22 ausgebildet, welche von einem Boden 33 des Nockenfolgerteils 22 im Bereich vom äußeren Rand des Bodens 33 umfänglich absteht. Die Nockenfolgerelemente 31 bilden hierbei Vertiefungen in der Wand 32. Der Boden 33 liegt in einer Ebene, die im montierten Zustand rechtwinkelig zur Längsachse 18 des Spannbolzens 16 steht.

Die Wand 32 ist zylindrisch ausgebildet, besitzt also in Draufsicht auf den Boden 33 gesehen einen kreisringförmigen Verlauf. Die Längsachse der zylindrischen Wand 32 fällt hierbei mit der Längsachse 18 des Spannbolzens 16 zusammen, d.h. die Wand 32 und der Spannbolzen 16 sind konzentrisch.

Ein jeweiliges Nockenfolgerelement 31 besitzt zum Zusammenwirken mit dem Nockenteil 20 eine Nockenfolgerfläche 34. Diese wird von der vom Boden 33 abgewandten stirnseitigen Schmalfläche der Wand 32 über einen jeweiligen Abschnitt der umfänglichen Erstreckung der stirnseitigen Schmalfläche dieser Wand 32 gebildet.

Das Nockenfolgerteil 22 ist aus einem ursprünglich ebenen Blechteil ausgebildet, welches eine obere und eine untere Deckfläche und eine die obere mit der unteren Deckfläche verbindende umlaufende Randfläche (das ist also die schmalseitige Fläche des Blechteils) besitzt. Nach dem Umformen des Blechteils bildet diese umlaufende Randfläche des Blechteils die vom Boden abgewandte stirnseitige Schmalfläche der Wand 32, d.h. die jeweilige Nockenfolgerfläche 34 wird von einem Abschnitt der umlaufenden Randfläche des ursprünglich ebenen Blechteils gebildet, aus dem das Nockenfolgerteil 22 ausgebildet ist.

Die Wand 28 bzw. 32 des Nockenteils 20 bzw. Nockenfolgerteils 22 könnte auch in Umfangsrichtung Unterbrechungen aufweisen, d.h. von mehreren durch Lücken getrennten Abschnitten gebildet werden.

Über die Nockenfläche 30 und die Nockenfolgerfläche 34 wirken der mindestens eine Nocken 27 des Nockenteils 20 und das mindestens eine Nockenfolgerelement 31 des Nockenfolgerteils 22 zusammen.

In der dem geöffneten Zustand der Spannvorrichtung 4 entsprechenden gegenseitigen Stellung des Nockenteils 20 und Nockenfolgerteils 22 (vgl. Fig. 4) ragt ein jeweiliger Nocken 27 in die vom jeweiligen Nockenfolgerelement 31 gebildete Vertiefung, wobei zumindest ein Abschnitt der Nockenfläche 30 des jeweiligen Nockens 27 an einem Abschnitt der Nockenfolgerfläche 34 des zugehörigen Nockenfolgerelements 31 im vertieften Bereich des Nockenfolgerelements 31 anliegt. Bei der Verdrehung des Nockenteils 20 gegenüber dem Nockenfolgerteil 22 zum Schließen der Spannvorrichtung 4 gleitet das Nockenteil 20 zumindest mit einem Abschnitt der Nockenfläche 30 des jeweiligen Nockens 27 über die Nockenfolgerfläche 34 des jeweiligen Nockenfolgerelements 31, wobei sich der Abstand der Böden 29, 34 des Nockenteils 20 und des Nockenfolgerteils 22 durch die Ausbildung der Nockenfolgerfläche 34 und/oder der Nockenfläche 30 als Schrägfläche (bezogen auf die axiale Richtung der Längsachse 18) vergrößert.

In der der Schließstellung der Spannvorrichtung 4 entsprechenden gegenseitigen Stellung zwischen dem Nockenteil 20 und dem Nockenfolgerteil 22 entsprechend Fig. 5 liegt ein jeweiliger Nocken mit zumindest einem Abschnitt der Nockenfläche 30 an einem Abschnitt der Nockenfolgerfläche 34 im Bereich des erhöhten Bereichs des jeweiligen Nockenfolgerelements 31 an.

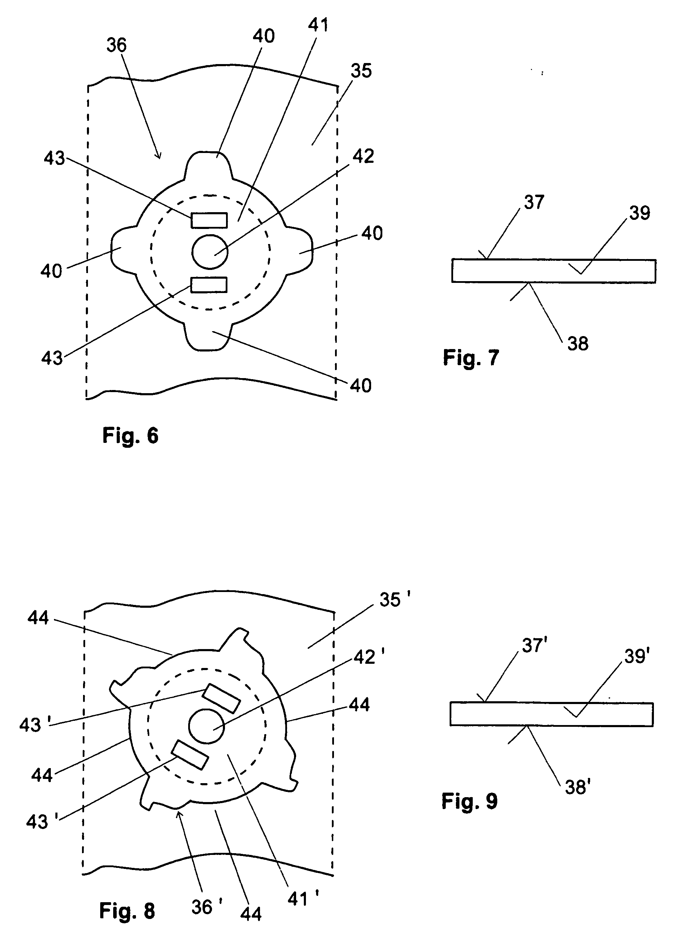

Zur Herstellung des Nockenteils 20 wird als Ausgangsmaterial ein ebenes Blech 35 eingesetzt, welches beispielsweise streifenförmig ausgebildet ist und von dem in Fig. 6 ein Abschnitt in strichlierten Linien angedeutet ist. Aus dem Blech 35 wird ein Blechteil 36 ausgestanzt, das in Fig. 6 in Ansicht und in Fig. 7 in Seitenansicht dargestellt ist. Das Blechteil 36 besitzt eine obere Deckfläche 37, eine untere Deckfläche 38 und eine umlaufende Randfläche 39, die die obere Deckfläche 37 und die untere Deckfläche 38 miteinander verbindet. Das Blechteil 36 besitzt eine den auszubildenden Nocken 27 entsprechende Anzahl von an seinem Umfang vorspringenden Vorsprüngen 40. Der im fertiggestellten Nockenteil 20 den Boden 29 ausbildende Bereich 41 liegt innerhalb der in Fig. 6 eingezeichneten strichlierten Linie. Im Blechteil 36 ist weiters die Öffnung 42 für den Spannbolzen 16 ausgestanzt.

Weiters sind im Ausführungsbeispiel Einschnitte 43 ausgestanzt, um die Formelemente 21 zu bilden.

Das Blechteil 36 wird im Weiteren umgeformt, um daraus das Nockenteil 20 auszubilden. Vorzugsweise umfasst dieses Umformen einen Tiefziehvorgang. Nach dem Tiefziehvorgang kann gegebenenfalls ein Nachdrückvorgang vorgesehen sein, um die genaue gewünschte Form des Nockenteils 20 zu erhalten, insbesondere um die Nocken 27 zu kalibrieren.

Die Formelemente 21 werden im Ausführungsbeispiel durch Herausbiegen der durch die Einschnitte 43 freigestellten Lappen gebildet.

Die jeweilige Nockenfläche 30 wird somit im fertiggestellten Zustand des Nockenteils 20 von einem jeweiligen Abschnitt der Randfläche 39 des Blechteils 36 gebildet.

Zur Herstellung des Nockenfolgerteils 22 wird als Ausgangsmaterial ein ebenes Blech 35' eingesetzt, welches beispielsweise streifenförmig ausgebildet ist und von dem in Fig. 8 ein Abschnitt in strichlierten Linien angedeutet ist. Aus dem Blech 35' wird ein Blechteil 36' ausgestanzt, das in Fig. 8 in Ansicht und in Fig. 9 in Seitenansicht dargestellt ist. Das Blechteil 36' besitzt eine obere Deckfläche 37', eine untere Deckfläche 38' und eine umlaufende Randfläche 39', die die obere Deckfläche 37' und die untere Deckfläche 38' miteinander verbindet. Das Blechteil 36' besitzt eine den auszubildenden Nockenfolgerelementen 31 entsprechende Anzahl von an seinem Umfang zurückspringenden Vertiefungen 44. Der im fertiggestellten Nockenfolgerteil 22 den Boden 33 ausbildende Bereich 41' liegt innerhalb der in Fig. 8 eingezeichneten strichlierten Linie. Im Blechteil 36' ist weiters die Öffnung 42' für den Spannbolzen 16 ausgestanzt.

Weiters sind im Ausführungsbeispiel Einschnitte 43' ausgestanzt, um die Formelemente 23 zu bilden.

Das Blechteil 36' wird im Weiteren umgeformt, um daraus das Nockenfolgerteil 22 auszubilden. Vorzugsweise umfasst dieses Umformen einen Tiefziehvorgang. Nach dem Tiefziehvorgang kann gegebenenfalls ein Nachdrückvorgang vorgesehen sein, um die genaue gewünschte Form des Nockenfolgerteils 22 zu erhalten, insbesondere um die Nockenfolgerelemente 31 zu kalibrieren.

Die Formelemente 23 werden im Ausführungsbeispiel durch Herausbiegen der durch die Einschnitte 43' freigestellten Lappen gebildet.

Die jeweilige Nockenfolgerfläche 34 wird somit im fertiggestellten Zustand des Nockenfolgerteils 22 von einem jeweiligen Abschnitt der Randfläche 39' des Blechteils 36' gebildet.

Es können auch das Nockenfolgerteil 22 als Spannteil der Spannvorrichtung 4 und das Nockenteil 20 als Gegenspannteil der Spannvorrichtung 4 angesehen werden.

Unterschiedliche Modifikationen des gezeigten Ausführungsbeispiels der Erfindung sind denkbar und möglich ohne den Bereich der Erfindung zu verlassen. So könnte beispielsweise entweder nur das Nockenteil 20 oder nur das Nockenfolgerteil 22 aus einem Blech ausgebildet sein und das andere der beiden Teile in anderer Weise ausgebildet sein, beispielsweise aus einem massiven Teil gefräst sein oder als Sinterteil hergestellt sein.

Auch könnte das Nockenfolgerteil 22 vom Betätigungshebel 17 um die Längsachse 18 des Spannbolzens 16 gegenüber dem Nockenteil 20, welches um die Längsachse 18 des Spannbolzens 16 unverdrehbar gehalten ist, verdreht werden. Die Anordnung des Nockenteils 20 und Nockenfolgerteils 22 auf dem Spannbolzen 16 könnte hierzu gegenüber dem in den Figuren dargestellten Ausführungsbeispiel vertauscht sein.

Die Wand 28, 32 des Nockenteils 20 bzw. Nockenfolgerteils 22 könnte von mehreren separaten Wandabschnitten gebildet werden, zwischen denen Lücken vorliegen. Insbesondere könnten diese Wandabschnitte jeweils teilzylindrisch bzw. in Ansicht gesehen teilringförmig ausgebildet sein und jeweils die Nockenfläche 30 eines der Nocken 27 bzw. die Nockenfolgerfläche 34 eines der Nockenfolgerelemente 31 aufweisen.

Im gezeigten Ausführungsbeispiel bildet die Nockenfolgerfläche 34 eine Schrägfläche (bezogen auf die axiale Richtung der Längsachse 18 des Spannbolzens 16). Stattdessen oder zusätzlich könnte auch die Nockenfläche 30 eine Schrägfläche bezogen auf die axiale Richtung der Längsachse 18 des Spannbolzens 16 bilden.

### Legende zu den Hinweisziffern:

- 1: Trageinheit
- 2: Stelleinheit
- 3: Lenkspindel
- 4: Spannvorrichtung
- 5: Längsrichtung
- 6: Stellrichtung
- 8: Verzahnung
- 9: Verzahnung
- 10: Verzahnung
- 11: Verzahnung
- 12: Seitenwange
- 13: Seitenwange
- 14: Zwischeneinheit
- 15: Schwenkachse
- 16: Spannbolzen
- 17: Betätigungshebel
- 18: Längsachse
- 19: Schließdrehrichtung
- 20: Nockenteil
- 21: Formelement
- 22: Nockenfolgerteil
- 23: Formelement
- 24: Feststellteil
- 25: Führungsleiste
- 26: Mutter
- 27: Nocken
- 28: Wand
- 29: Boden
- 30: Nockenfläche
- 31: Nockenfolgerelement
- 32: Wand
- 33: Boden
- 34: Nockenfolgerfläche
- 35, 35': Blech
- 36, 36': Blechteil
- 37, 37': obere Deckfläche
- 38, 38': untere Deckfläche
- 39, 39': Randfläche
- 40: Vorsprung
- 41, 41': Bereich
- 42, 42': Öffnung
- 43, 43': Einschnitt
- 44: Vertiefung

## Patentansprüche

1. Spannteil für eine in einer verstellbaren Lenksäule für ein Kraftfahrzeug integrierte Spannvorrichtung (4), die durch eine um eine Längsachse (18) erfolgende Verdrehung des Spannteils (20, 22) gegenüber einem Gegenspannteil (22, 20) schließbar und öffenbar ist, wobei das Spannteil ein Nockenteil (20), das zum Zusammenwirken mit dem als Nockenfolgerteil (22) ausgebildeten Gegenspannteil mindestens einen Nocken (27) mit einer Nockenfläche (30) aufweist, oder ein Nockenfolgerteil (22) ist, das zum Zusammenwirken mit dem als Nockenteil (20) ausgebildeten Gegenspannteil mindestens ein Nockenfolgerelement (31) mit einer Nockenfolgerfläche (34) aufweist, und wobei das Spannteil (20, 22) aus einem Blechteil (36, 36') ausgebildet ist, **dadurch gekennzeichnet, dass** die Nockenfläche (30) des mindestens einen Nockens (27) des Spannteils (20) oder die Nockenfolgerfläche (34) des mindestens einen Nockenfolgerelementes (31) des Spannteils (22) an einer zum Gegenspannteil (22, 20) gerichteten Randfläche (39) des das Spannteil (20, 22) ausbildenden Blechteils (36, 36') angeordnet ist.

2. Spannteil nach Anspruch 1, **dadurch gekennzeichnet, dass** die Nockenfläche (30) des Spannteils (20) oder die Nockenfolgerfläche (34) des Spannteils (22) an einer stirnseitigen Schmalfläche einer Wand (28, 32) angeordnet ist, die winkelig, vorzugsweise rechtwinkelig, von einem Boden des Spannteils (20, 22) absteht.

3. Spannteil nach Anspruch 2, **dadurch gekennzeichnet, dass** das Spannteil (20, 22) topfförmig ausgebildet ist, wobei die Wand (28, 32) kreisringförmig entlang des gesamten Umfangs des Bodens (29, 33) vom Boden (29, 33) absteht.

4. Verstellbare Lenksäule für ein Kraftfahrzeug mit einer Spannvorrichtung (4), in deren geöffnetem Zustand eine einen Abschnitt der Lenkspindel (3) drehbar lagernde Stelleinheit (2) der Lenksäule verstellbar ist und in deren geschlossenem Zustand die eingestellte Position der Stelleinheit (2) festgestellt ist, wobei die Spannvorrichtung (4) ein Nockenteil (20), das mindestens einen Nocken (27) mit einer Nockenfläche (30) aufweist, und ein Nockenfolgerteil (22) umfasst, das mindestens ein Nockenfolgerelement (31) mit einer Nockenfolgerfläche (34) aufweist, und wobei das Nockenteil (20) und das Nockenfolgerteil (22) zum Öffnen und Schließen der Spannvorrichtung (4) gegeneinander verdrehbar sind und das Nockenteil (20) und/oder das Nockenfolgerteil (22) aus einem Blechteil (36, 36') ausgebildet ist oder sind, **dadurch gekennzeichnet, dass** die Nockenfläche (30) des mindestens einen Nockens (27) an einer zum Nockenfolgerteil (22) gerichteten Randfläche (39) des das Nockenteil (20) ausbildenden Blechteils (36) angeordnet ist und/oder die Nockenfolgerfläche (30) des mindestens einen Nockenfolgerelements (31) an einer zum Nockenteil (20) gerichteten Randfläche (39') des das Nockenfolgerteil (22) ausbildenden Blechteils (36') angeordnet ist.

5. Verstellbare Lenksäule nach Anspruch 4, **dadurch gekennzeichnet, dass** das Nockenteil (20) und das Nockenfolgerteil (22) auf einem Spannbolzen (16) der Spannvorrichtung (4) angeordnet sind und die Verdrehung des Nockenteils (20) gegenüber dem Nockenfolgerteil (22) um die Längsachse (18) des Spannbolzens (16) erfolgt.

6. Verstellbare Lenksäule nach Anspruch 4 oder 5, **dadurch gekennzeichnet, dass** das Nockenteil (20) und/oder das Nockenfolgerteil (22) mindestens ein Formelement (21, 23) aufweist, mit welchem es formschlüssig gegen eine Verdrehung gegenüber einem die Spannvorrichtung (4) betätigenden, um die Längsachse (18) des Spannbolzens (16) verschwenkbaren Betätigungshebel (17) und/oder gegenüber einem Feststellteil (24) der Spannvorrichtung (4) gehalten ist.

7. Verfahren zur Herstellung eines Spannteils für eine in einer verstellbaren Lenksäule für ein Kraftfahrzeug integrierte Spannvorrichtung (4), die durch eine um eine Längsachse (18) erfolgende Verdrehung des Spannteils (20, 22) gegenüber einem Gegenspannteil (22, 20) schließbar und öffenbar ist, wobei das Spannteil ein Nockenteil (20), das zum Zusammenwirken mit dem als Nockenfolgerteil (22) ausgebildeten Gegenspannteil mindestens einen Nocken (27) mit einer Nockenfläche (30) aufweist, oder ein Nockenfolgerteil (22) ist, das zum Zusammenwirken mit dem als Nockenteil (20) ausgebildeten Gegenspannteil mindestens ein Nockenfolgerelement (31) mit einer Nockenfolgerfläche (34) aufweist, und wobei das Spannteil (20, 22) aus einem Blechteil (36, 36') ausgebildet wird, **dadurch gekennzeichnet, dass** zur Herstellung des Spannteils (20, 22) aus einem ebenen Blech (35, 35') durch Zerteilung des Blechs (35, 35') ein ebenes Blechteil (36, 36') ausgebildet wird, welches eine obere und eine untere Deckfläche (37, 37'; 38, 38') und eine umlaufende Randfläche (39, 39') aufweist und welches im Weiteren umgeformt wird, wobei ein Boden (29, 33) und eine vom Boden abstehende Wand (28, 32) ausgebildet werden, deren vom Boden (29, 33) abgewandte stirnseitige Schmalfläche von der Randfläche (39, 39') des Blechteils (36, 36') gebildet wird und die mindestens eine Nockenfläche (30) oder Nockenfolgerfläche (34) aufweist.

8. Verfahren nach Anspruch 7, **dadurch gekennzeichnet, dass** das Blechteil (36, 36') aus dem ebenen Blech (35, 35') ausgestanzt wird.

9. Verfahren nach Anspruch 7 oder 8, **dadurch gekennzeichnet, dass** die Umformung des Blechteils (36, 36') ein Tiefziehen umfasst.

10. Verfahren nach einem der Ansprüche 7 bis 9, **dadurch gekennzeichnet, dass** das Spannteil (20, 22) topfförmig ausgebildet wird, wobei die Wand (28, 32) kreisringförmig ausgebildet wird.

## Claims

1. A tensioning member for a tensioning device (4) which is integrated in an adjustable steering column for a motor vehicle, which device can be closed and opened by a turning of the tensioning member (20, 22) relative to a mating tensioning member (22, 20) which takes place about a longitudinal axis (18), the tensioning member being a cam member (20) which, for cooperation with the mating tensioning member which is formed as a cam follower member (22), has at least one cam (27) with a cam surface (30), or being a cam follower member (22) which, for cooperation with the mating tensioning member which is formed as a cam member (20), has at least one cam follower element (31) with a cam follower surface (34), and the tensioning member (20, 22) being formed from a sheet-metal part (36, 36'), **characterised in that** the cam surface (30) of the at least one cam (27) of the tensioning member (20), or the cam follower surface (34) of the at least one cam follower element (31) of the tensioning member (22), is arranged on an edge surface (39), which is directed towards the mating tensioning member (22, 20), of the sheet-metal part (36, 36') which forms the tensioning member (20, 22).

2. A tensioning member according to Claim 1, **characterised in that** the cam surface (30) of the tensioning member (20) or the cam follower surface (34) of the tensioning member (22) is arranged on an end-face narrow surface of a wall (28, 32) which stands proud at an angle, preferably at right-angles, from a base of the tensioning member (20, 22).

3. A tensioning member according to Claim 2, **characterised in that** the tensioning member (20, 22) is formed in a pot-shape, the wall (28, 32) standing proud from the base (29, 33) in the shape of a circular ring along the entire periphery of the base (29, 33).

4. An adjustable steering column for a motor vehicle with a tensioning device (4), in the opened state of which an adjustment unit (2) of the steering column which rotatably bears a section of the steering shaft (3) is adjustable and in the closed state of which the set position of the adjustment unit (2) is locked, the tensioning device (4) comprising a cam member (20) which has at least one cam (27) with a cam surface (30), and a cam follower member (22) which has at least one cam follower element (31) with a cam follower surface (34), and the cam member (20) and the cam follower member (22) being able to be turned relative to each other for opening and closing the tensioning device (4) and the cam member (20) and/or the cam follower member (22) being formed from a sheet-metal part (36, 36'), **characterised in that** the cam surface (30) of the at least one cam (27) is arranged on an edge surface (39), which is directed towards the cam follower member (22), of the sheet-metal part (36) which forms the cam member (20) and/or the cam follower surface (30) of the at least one cam follower element (31) is arranged on an edge surface (39'), which is directed towards the cam member (20), of the sheet-metal part (36') which forms the cam follower member (22).

5. An adjustable steering column according to Claim 4, **characterised in that** the cam member (20) and the cam follower member (22) are arranged on a tensioning bolt (16) of the tensioning device (4), and the turning of the cam member (20) relative to the cam follower member (22) takes place about the longitudinal axis (18) of the tensioning bolt (16).

6. An adjustable steering column according to Claim 4 or 5, **characterised in that** the cam member (20) and/or the cam follower member (22) has at least one shaped element (21, 23) with which it is held in a positive lock against turning relative to an actuating lever (17) which actuates the tensioning device (4) and is pivotable about the longitudinal axis (18) of the tensioning bolt (16), and/or relative to a locking member (24) of the tensioning device (4).

7. A method for producing a tensioning member for a tensioning device (4) which is integrated in an adjustable steering column for a motor vehicle, which device can be closed and opened by a turning of the tensioning member (20, 22) relative to a mating tensioning member (22, 20) which takes place about a longitudinal axis (18), the tensioning member being a cam member (20) which, for cooperation with the mating tensioning member which is formed as a cam follower member (22), has at least one cam (27) with a cam surface (30), or being a cam follower member (22) which, for cooperation with the mating tensioning member which is formed as a cam member (20), has at least one cam follower element (31) with a cam follower surface (34), and the tensioning member (20, 22) being formed from a sheet-metal part (36, 36'), **characterised in that** for producing the tensioning member (20, 22) a flat sheet-metal part (36, 36') is formed from a flat metal sheet (35, 35') by dividing the metal sheet (35, 35'), which sheet-metal part has an upper and a lower cover surface (37, 37'; 38, 38') and a circumambient edge surface (39, 39'), and which is further shaped, with a base (29, 33) and a wall (28, 32) standing proud from the base being formed, the end-face narrow surface of which which is remote from the base (29, 33) is formed by the edge surface (39, 39') of the sheet-metal part (36, 36') and which has at least one cam surface (30) or cam follower surface (34).

8. A method according to Claim 7, **characterised in that** the sheet-metal part (36, 36') is cut out from the flat metal sheet (35, 35').

9. A method according to Claim 7 or 8, **characterised in that** the shaping of the sheet-metal part (36, 36') comprises deep drawing.

10. A method according to one of Claims 7 to 9, **characterised in that** the tensioning member (20, 22) is formed in a pot-shape, the wall (28, 32) being designed in the shape of a circular ring.

## Revendications

1. Élément de serrage pour un dispositif de serrage (4) intégré dans une colonne de direction réglable pour un véhicule automobile, qui peut être fermé et ouvert par une rotation s'effectuant autour d'un axe longitudinal (18) de l'élément de serrage (20, 22) par rapport à un élément de serrage antagoniste (22, 20), l'élément de serrage étant un élément de came (20) qui présente au moins une came (27) avec une surface de came (30) pour la coopération avec l'élément de serrage antagoniste réalisé comme partie suiveuse de came (22), ou une partie suiveuse de came (22) qui présente au moins un élément suiveur de came (31) avec une surface suiveuse de came (34), pour la coopération avec l'élément de serrage antagoniste réalisé comme élément de came (20) et l'élément de serrage (20, 22) étant réalisé à partir d'une partie de tôle (36, 36'), **caractérisé en ce que** la surface de came (30) de la ou des cames (27) de l'élément de serrage (20) ou la surface suiveuse de came (34) du ou des éléments suiveur de came (31) de l'élément de serrage (22) est disposée sur une surface de bord (39) de la partie de tôle (36, 36') formant l'élément de serrage (20, 22), la surface de bord (39) étant dirigée vers l'élément de serrage antagoniste (22, 20).

2. Élément de serrage selon la revendication 1, **caractérisé en ce que** la surface de came (30) de l'élément de serrage (20) ou la surface suiveuse de came (34) de l'élément de serrage (22) est disposée sur une surface étroite d'une paroi (28, 32) côté avant qui dépasse angulairement, de préférence à angle droit, d'un fond de l'élément de serrage (20, 22).

3. Élément de serrage selon la revendication 2, **caractérisé en ce que** l'élément de serrage (20, 22) est réalisé en forme de pot, la paroi (28, 32) dépassant du fond (29, 33) en forme d'anneau de cercle le long de la totalité de la périphérie du fond (29, 33).

4. Colonne de direction réglable pour un véhicule automobile avec un dispositif de serrage (4), dans l'état ouvert duquel une unité de réglage (2) de la colonne de direction logeant de manière rotative une section de l'arbre de direction (3) peut être réglée et dans l'état fermé duquel la position réglée de l'unité de réglage (2) est fixée, le dispositif de serrage (4) présente un élément de came (20) qui présente au moins une came (27) avec une surface de came (30), et une partie suiveuse de came (22) qui présente au moins un élément suiveur de came (31) avec une surface suiveuse de came (34), et l'élément de came (20) et la partie suiveuse de came (22) pouvant être tournés l'un contre l'autre pour l'ouverture et la fermeture du dispositif de serrage (4) et l'élément de came (20) et/ou la partie suiveuse de came (22) étant réalisée dans une partie de tôle (36, 36'), **caractérisée en ce que** la surface de came (30) de la ou des cames (27) est disposée sur une surface de bord (39) de la partie de tôle (36) formant l'élément de came (20), cette surface de bord (39) étant dirigée vers la partie suiveuse de came (22) et/ou la surface suiveuse de came (30) du ou des éléments suiveurs de came (31) est disposée sur une surface de bord (39') de la partie de tôle (36') formant la partie suiveuse de came (22), cette surface de bord (39') étant dirigée vers l'élément de came (20).

5. Colonne de direction réglable selon la revendication 4, **caractérisée en ce que** l'élément de came (20) et la partie suiveuse de came (22) sont disposés sur un boulon de serrage (16) du dispositif de serrage (4) et la rotation de l'élément de came (20) est effectuée par rapport à la partie suiveuse de came (22) autour de l'axe de rotation (18) du boulon de serrage (16).

6. Colonne de direction réglable selon la revendication 4 ou 5, **caractérisée en ce que** l'élément de came (20) et/ou la partie suiveuse de came (22) présente au moins un élément à complémentarité de formes (21, 23), avec lequel il est maintenu par complémentarité de formes contre une rotation par rapport à un levier d'actionnement (17) actionnant le dispositif de serrage (4), et pouvant pivoter autour de l'axe longitudinal (18) du boulon de serrage (16) et/ou par rapport à un élément de fixation (24) du dispositif de serrage (4).

7. Procédé de fabrication d'un élément de serrage pour un dispositif de serrage (4) intégré dans une colonne de direction réglable pour un véhicule automobile, qui peut être fermé et ouvert par une rotation de l'élément de serrage (20, 22) s'effectuant autour d'un axe longitudinal (18) par rapport à un élément de serrage antagoniste (22, 20), l'élément de serrage étant un élément de came (20) qui présente au moins une came (27) avec une surface de came (30) pour la coopération avec l'élément de serrage antagoniste réalisé comme élément suiveur de came (22), ou un élément suiveur de came (22) qui présente au moins un élément suiveur de came (31) avec une surface suiveuse de came (34) pour la coopération avec l'élément de serrage antagoniste réalisé comme élément de came (20), et l'élément de serrage (20, 22) étant réalisé en une partie de tôle (36, 36'), **caractérisé en ce qu'**une partie de tôle (36, 36') plane est formée pour la fabrication de l'élément de serrage (20, 22) en une tôle plane (35, 35') par découpage de la tôle (35, 35'), laquelle présente une surface de recouvrement (37, 37') supérieure et une surface de recouvrement inférieure (38, 38') et une surface de bord (39, 39') périphérique et est en outre transformée, un fond (29, 33) et une paroi (28, 32) dépassant du fond étant réalisés, dont la surface étroite côté avant éloignée du fond (29, 33) est formée par la surface de bord (39, 39') de la partie de tôle (36, 36') et présente la ou les surfaces de came (30) ou surfaces suiveuses de came (34).

8. Procédé selon la revendication 7, **caractérisé en ce que** la partie de tôle (36, 36') est estampée dans la tôle plane (35, 35').

9. Procédé selon la revendication 7 ou 8, **caractérisé en ce que** la transformation de la partie de tôle (36, 36') comporte un emboutissage profond.

10. Procédé selon l'une quelconque des revendications 7 à 9, **caractérisé en ce que** l'élément de serrage (20, 22) est réalisé en forme de pot, la paroi (28, 32) étant réalisée en forme d'anneau de cercle.
